# EUROPEAN PATENT APPLICATION

(11) **EP 1 028 386 A2**
(43) Date of publication of application: **16.08.2000**
(21) Application number: 00301001.4
(22) Date of filing: 09.02.2000
(51) Int. Cl.: G06F 17/60

(54) **Network-based product information server**

(30) Priority: 10.02.1999 US 248357
(71) Applicant: International Business Machines Corporation, Armonk, NY 10504 (US)
(72) Inventor: Berstis, Viktors, Winchester, Hampshire SO21 2JN (GB); Lisle, Linda Arnold, Winchester, Hampshire SO21 2JN (GB)
(74) Representative: Jennings, Michael John

(57) **Abstract**

A system and method for providing product information to a consumer of a product Registration information including an identifier of the product and information relating to the consumer of the product is received. It is determined whether the identifier is valid. If the identifier is valid, the registration information is stored. An access code identifying the stored registration information is transmitted as is product information relating to the product identified by the identifier. A warranty for the product identified by the identifier may be registered. The registration information may further include a financial account number and an extended warranty for the product identified by the identifier may be registered a financial account specified by the financial account number may be charged for the extended warranty. The financial account may be charged periodically. The access code may be received, upon which the stored registration information including the identifier of the product is retrieved using the access code and current product information relating to the product identified by the identifier is transmitted. The access code may be received periodically. The registration information may further include a financial account number and a financial account specified by the financial account number may be charged for transmission of the current product information.

## Description

### Field of the Invention

The present invention relates to a network-based server for registering consumer product warranties and providing consumer product information.

### Background of the Invention

Consumer products which provide warranties typically require the consumer who purchases or uses the product to register the warranty with the manufacturer. Such products typically include a printed statement of the warranty, along with a warranty registration card to be returned to the manufacturer to register the warranty. Such products also typically include product documents, such as user's or operating manuals, safety precautions, promotional literature, etc. Problems arise in that many consumers fail to return the warranty card to register the warranty and may lose the documents included with the product. Further, the product documents may need to be updated from time to time. A need arises for a technique which simplifies the warranty registration process, provides incentive to the consumer to register the warranty, and which ensures that the most recent product documents are easily available to the consumer at any time.

### Summary of the Invention

The present invention provides a method of providing product information to a consumer of a product over a network, the method comprising the steps of: receiving registration information including an identifier of the product and information relating to the consumer of the product; determining whether the identifier is valid; storing the registration information; transmitting an access code identifying the stored registration information; transmitting product information relating to the product identified by the identifier.

In a second aspect, the invention provides a system for providing product information to a consumer of a product, comprising: means for receiving registration information including an identifier of the product and information relating to the consumer of the product; means for determining whether the identifier is valid; means for storing the registration information; means for transmitting an access code identifying the stored registration information; means for transmitting product information relating to the product identified by the identifier.

In a third aspect the invention provides A system for providing product information to a consumer of a product, comprising: a receiver operable to receive registration information including an identifier of the product and information relating to the consumer of the product; a validation device operable to determine whether the identifier is valid; a database operable to store the registration information; a transmitter operable to transmit an access code identifying the stored registration information and product information relating to the product identified by the identifier.

A first embodiment of the present invention provides a system and method for providing product information to a consumer of a product which simplifies the warranty registration process, provides incentive to the consumer to register the warranty, and which ensures that the most recent product documents are easily available to the consumer at any time. Registration information including an identifier of the product and information relating to the consumer of the product is received. It is determined whether the identifier is valid. If the identifier is valid, the registration information is stored. An access code identifying the stored registration information is transmitted as is product information relating to the product identified by the identifier. A warranty for the product identified by the identifier may be registered.

The registration information may further include a financial account number, and an extended warranty for the product identified by the identifier may be registered, and a financial account specified by the financial account number may be charged for the extended warranty. The financial account may be charged periodically.

The access code may be received, upon which the stored registration information including the identifier of the product is retrieved using the access code and current product information relating to the product identified by the identifier is transmitted. The access code may be received periodically.

The registration information may further include a financial account number and a financial account specified by the financial account number may be charged for transmission of the current product information.

### Brief Description of the Drawings

An embodiment of the invention will now be described, by way of example only, with reference to the accompanying drawings, in which like reference numbers and designations refer to like elements.

Fig. 1 is a block diagram of a product information server, according to the present invention, and a system in which the present invention operates.

Fig. 2 is a flow diagram of a flow diagram of a process of operation of the present invention.

Fig. 3 is an exemplary block diagram of a consumer system shown in Fig. 1.

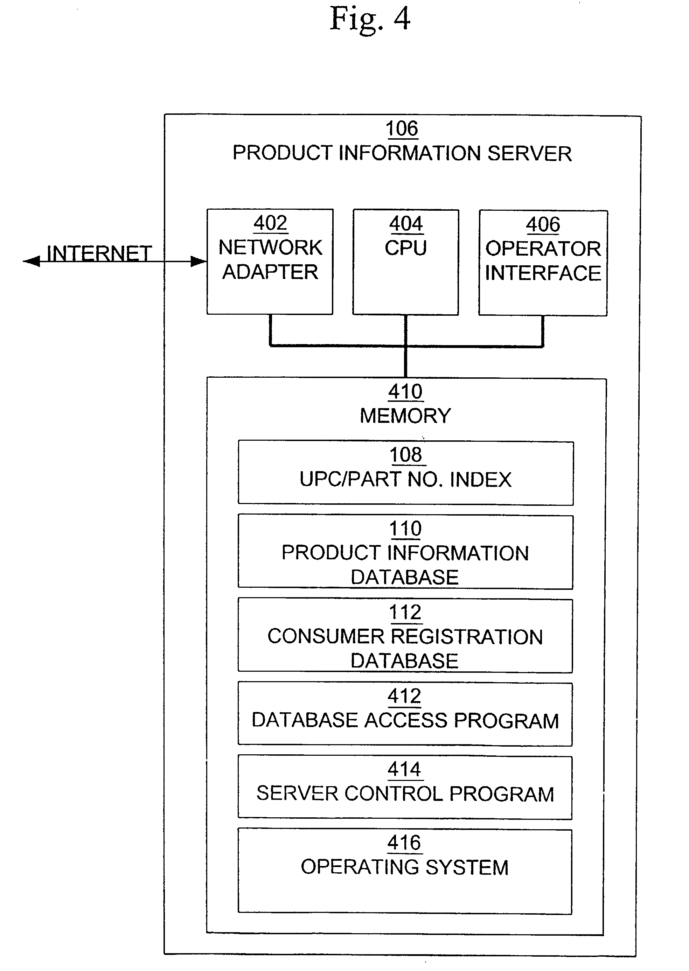

Fig. 4 is an exemplary block diagram of a product information server shown in Fig. 1.

Fig. 5 is an exemplary format of an entry in a consumer registration database shown in Fig. 1.

### Detailed Description of Preferred Embodiment

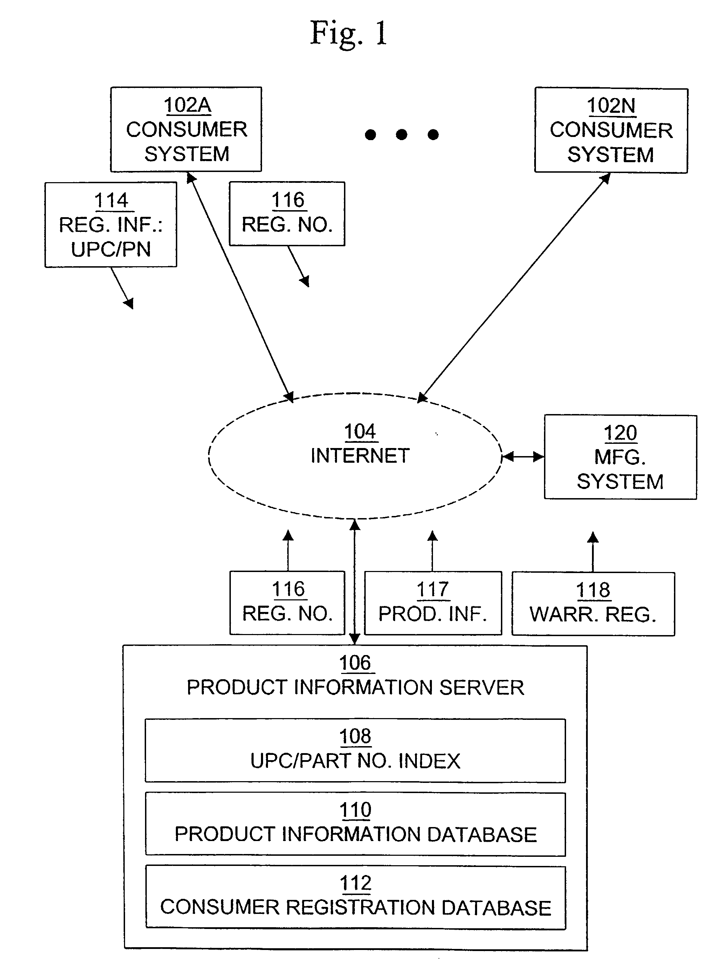

A product information server, and system in which it operates, is shown in Fig. 1. One or more consumer-operated computer systems, such as consumer systems 102A-102N are communicatively connected via a network, preferably the Internet 104, to product information server 106. Product information server 106 includes Universal Product Code (UPC)/part number index 108, product information database 110, and consumer registration database 112. UPC/part number index 108 indexes the product code and/or part number for the supported products with related product documents stored in product information database 110. User registration database 112 contains information relating to registered users of the system.

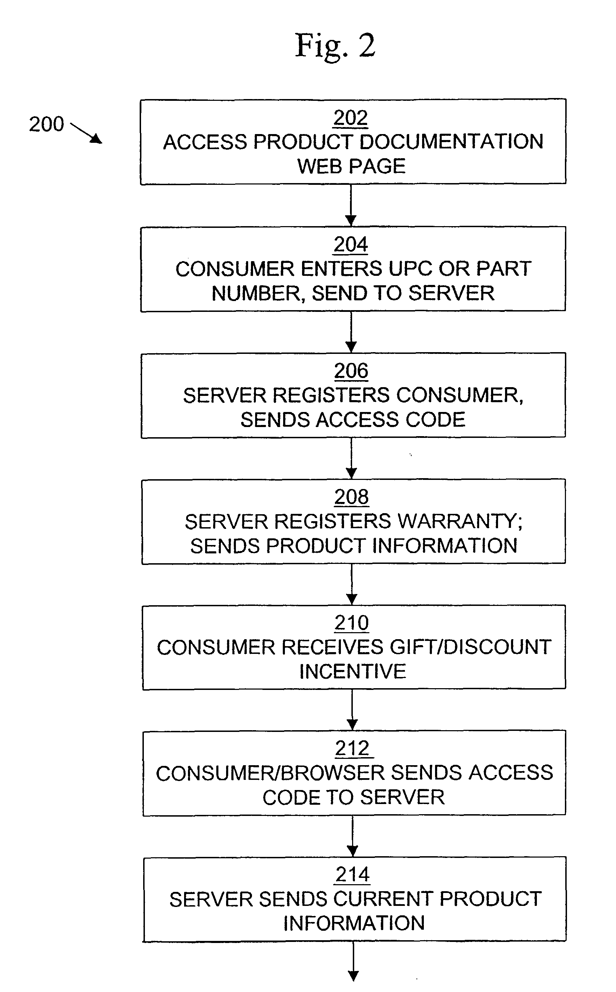

A flow diagram of a process of operation 200 of the present invention is shown in Fig. 2. It is best understood when viewed in conjunction with Fig. 1. Process 200 begins with step 202, in which a consumer, operating a computer system, such as system 102A, accesses a web page provided by product information server 106. As is well known, a web page is accessed by computer operator by entering a uniform resource locator (URL) into a browser program, which then interacts with the Internet to access the web page specified by the URL.

In step 204, the consumer registers a product by entering into the browser registration information including a UPC or part number, which serves as an identifier of the product to be registered. The registration information may also include information such as the consumer's name and address, the location of the product purchase, the serial number of the product, a transaction identification number from the place of purchase, and other information which the operator of product information server 106 or the manufacturer of the product wants to know. The browser transmits the UPC or part number and registration information 114, shown in Fig. 1, via the Internet 104 to product information server 106.

In step 206, product information server 106 registers the consumer and sends the consumer an access code or registration number 116, which allows the consumer to access product information. In order to perform this step, product information server 106 accesses UPC/part number index 108 using the UPC or part number received from the consumer system 102A to verify that a valid UPC or part number has been received. In addition, product information server 106 accesses consumer registration database 112 to determine whether the consumer is already registered with product information server 106. If the consumer is already registered, registration information corresponding to the product identified by the received UPC or part number is added to the consumer's entry in consumer registration database 112. If the consumer is not already registered, an entry corresponding to the consumer is added to consumer registration database 112, along with registration information corresponding to the product identified by the received UPC or part number. Once the UPC or part number has been verified, product information server 106 sends the consumer access code or registration number 116, which may be stored by the browser program on consumer system 102A. Preferably, the access code 116 uniquely identifies both a product and the consumer who purchased the product.

In step 208, product information server 106 registers the consumer's warranty for the product identified by the received UPC or part number with the manufacturer of the product and sends product information 117 to the consumer. In the embodiment shown in Fig. 1, warranty registration may be performed electronically, such as over the Internet, a local or wide-area network, a dedicated connection or a dial-up connection by transmitting warranty registration information 118 to a manufacturer's computer system 120. In another embodiment, warranty registration information is printed out and mailed or otherwise delivered to the manufacturer. In still another embodiment, the manufacturer may contract with the operator of product information server 106 to maintain that manufacturer's warranty registration database, or even to provide that manufacturer's warranty service.

In order to send product information 117, product information server 106 accesses product information database 110 to retrieve product information related to the product being registered. Such product information may include owner's manuals, user's manuals, safety precautions, repair manuals, specifications and promotional literature, such as accessory catalogs, sales information, and catalogs of other products. The operator of product information server 106 may determine for each product supported by product information server 106 whether all of the information related to a product will be sent upon registration, or whether only a portion will be sent. Typically, only owner's or user's manuals, safety precautions and promotional literature will be sent at product registration.

Consumer system 102A receives and may store product information 117. The consumer may store such product information for all products so registered by the consumer on consumer system 102A, using any desired organization. The consumer may print out any or all of the product information and may backup such information , if desired.

In step 210, the consumer receives any additional incentives for warranty registration that the operator of product information server 106 and/or the manufacturer of the product being registered may wish to provide. For example, a rebate may be provided to the consumer for completing on-line warranty registration. The rebate may be directly credited to a credit card or other financial service account for which the consumer supplies the account number. Alternatively, product information server 106 may send a rebate certificate, optionally including a unique identifier, that the consumer may mail-in to receive the rebate. As another example, the consumer may be given a credit in a shopping account maintained by the operator of product information server 106, by the manufacturer of the registered product, or by any other suitable party. The credit may be used to purchase goods and/or services supplied by such parties. An alternative approach would be for the manufacturer and/or retailer of the product to give the consumer a discount upon purchase of the product for participating in the on-line product information option.

The product information stored in product information database 110 may be easily updated, modified, replaced, or deleted, to reflect the latest state of information relating to each product. Since product information server stores information relating to consumers and the registered products they have purchased in consumer registration database 112, consumers may access product information server 106 and retrieve the latest product information as desired. In step 212, the consumer and/or browser program causes consumer system 102A to send the previously received access code or registration number 116 to product information server 106. Product information server 106 accesses consumer registration database 112 to retrieve information relating to the consumer and the registered product identified by access code 116. Product information server 106 then accesses product information database 110 and retrieves the current product information for the registered product associated with the access code. In step 214, product information server 106 sends the retrieved current product information to consumer system 102A.

Typically, consumers will access product information server 106 if they lose or delete previously received product information, or if they want to determine if any new or additional information is available. The product information access process may be automated. In one embodiment, the browser program may periodically access product information server 106 and obtain the current product information. In another embodiment, product information may be updated only when the consumer accesses the stored product information on consumer system 102A. In still another embodiment, product information server 106 may occasionally or periodically send updated information to the consumer system, either via e-mail or via a "pusher" technology.

In one embodiment of the present invention, product information server 106 may provide a procedure for a consumer who has lost the access codes that were sent to him to gain access. For example, product information server 106 may allow a consumer to enter other registration information, such as the consumer's name and address and the product identifier and serial number. Product information server 106 would then use the entered information to locate the appropriate entries in consumer registration database 112. Product information server 112 could then send the access codes to the consumer again.

In another embodiment, product information server 106 could provide access to product information to unregistered users. For example, potential consumers may wish to learn about various products before purchasing them. Product information such as owner's and user's manuals would be helpful to such users. In addition, other information, such as specifications and promotional information may also be helpful. In this embodiment, manufacturers and vendors of products may wish to provide such information to encourage potential consumers to purchase their products. The operator of product information server 106 would likely be able to charge manufacturers and vendors a fee for such an arrangement.

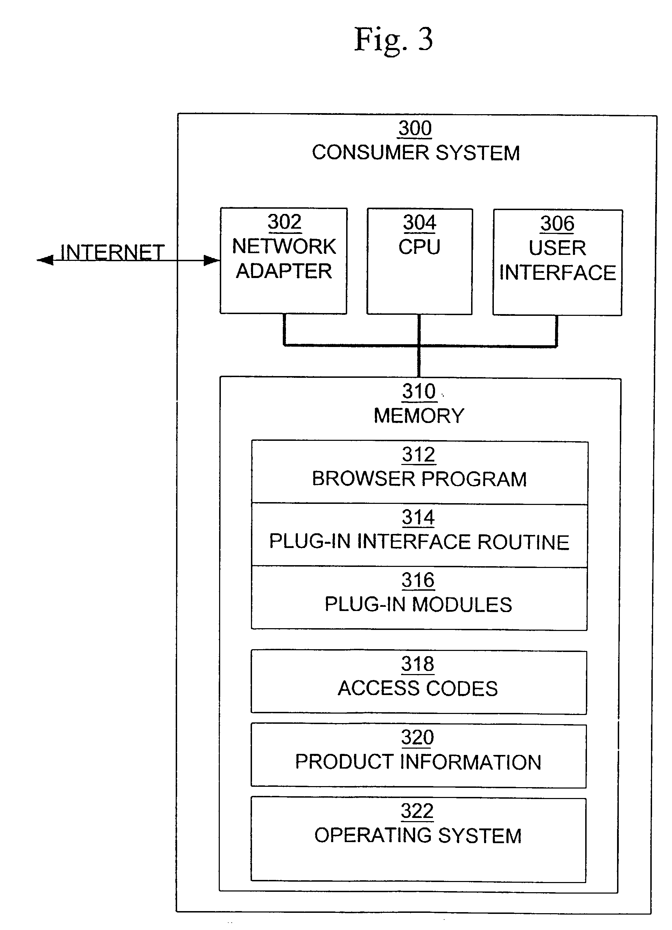

An exemplary consumer system 102A, as shown in Fig. 1, is shown in Fig. 3. Consumer system 102A includes central processing unit (CPU) 304, which is connected to network adapter 302, user interface 306, and memory 310. Network adapter 302 couples consumer system 102A to a network, preferably the Internet, allowing data communications with servers coupled to the network. Network adapter 302 typically includes a modem, either internal or external, but may include an ISDN adapter, local or wide area network adapter, etc. User interface 306 accepts input from a user and displays output generated by consumer system 102A to the user. User interface 306 typically includes a mouse, keyboard and monitor, but may also include other devices, such as a graphics tablet, trackpad, trackball, scanner, printer, etc.

Memory 310 is accessible by CPU 304 and stores program instructions executed by CPU 304 and data used during program execution. Memory 310 typically includes devices such as random-access memory (RAM), read-only memory (ROM), programmable read-only memory (PROM), erasable programmable read-only memory (EPROM), electrically erasable programmable read-only memory (EEPROM), and storage devices, such as hard disk drives, floppy disk drives, tape drives, optical drives, etc.

Memory 310 includes browser program 312, plug-in interface routine 314, plug-in modules 316, access codes 318, product information 320 and operating consumer system 322. Browser program 312 implements all of the "built-in" functions of the browser, while plug-in interface 314 interfaces plug-in modules 316 with browser program 312. Plug-in modules 316 add additional, "non-built-in" functionality to the browser. Access codes block 318 includes the access codes returned by product information server 106 upon registration of each product. Product information block 320 includes the product information sent by product information server 106.

An exemplary product information server 106, such as product information server 106 of Fig. 1, is shown in Fig. 3. Product information server 106 includes central processing unit (CPU) 404, which is connected to network adapter 402, operator interface 406, and memory 410. Network adapter 402 couples product information server 106 to the Internet, allowing data communications with computer systems, such as consumer system 102A, which are coupled to the Internet. Network adapter 402 typically includes a T1 or T3 interface, but may include an ISDN adapter, local or wide area network adapter, etc. Operator interface 406 accepts input from a person operating product information server 106 and displays output generated by product information server 106 to the person. Operator interface 406 typically includes a mouse, keyboard and monitor, but may also include other devices, such as a graphics tablet, trackpad, trackball, scanner, printer, etc.

Memory 410 is accessible by CPU 404 and stores program instructions executed by CPU 404 and data used during program execution. Memory 410 typically includes devices such as random-access memory (RAM), read-only memory (ROM), programmable read-only memory (PROM), erasable programmable read-only memory (EPROM), electrically erasable programmable read-only memory (EEPROM), and storage devices, such as hard disk drives, floppy disk drives, tape drives, optical drives, etc.

Memory 410 includes UPC/part number index 108, product information database 110, consumer registration database 112, database access program 412, server control program 414, and operating system 422. UPC/part number index 108 indexes the product code and/or part number for the supported products with related product documents stored in product information database 110. User registration database 112 contains information relating to registered users of the system. Database access program 412 accesses UPC/part number index 108, product information database 110, and consumer registration database 112 in order to respond to queries based on input information such as a UPC or part number or an access code. Server control program 414, in conjunction with operating system 416, provides server functionality to product information server 106, such as Transmission Control Protocol/Internet Protocol (TCP/IP), File Transfer Protocol (FTP), Hypertext Transfer Protocol (HTTP), etc.

The product information document in product information database 110 may be stored in any suitable format. Preferably, the product information documents are stored in portable document format (PDF), but other formats which may be suitable, depending upon the contents of each document, include graphic interchange format (GIF), Joint Photographic Experts Group (JPEG) format, tagged image file format (TIFF), text format, a word-processing format such as MICROSOFT WORD or WORDPERFECT format, or a combination of such formats. In some instances it may even be desirable to store product information in the form of video and/or sound, in such formats as Moving Picture Experts Group (MPEG) format or WINDOWS audio/visual interface (AVI) format.

The product information documents may be transferred from product information server 106 to consumer system 102A using any suitable transfer protocol. Preferably, HTTP or FTP protocols will be used, but any suitably robust and compatible protocol may be used instead.

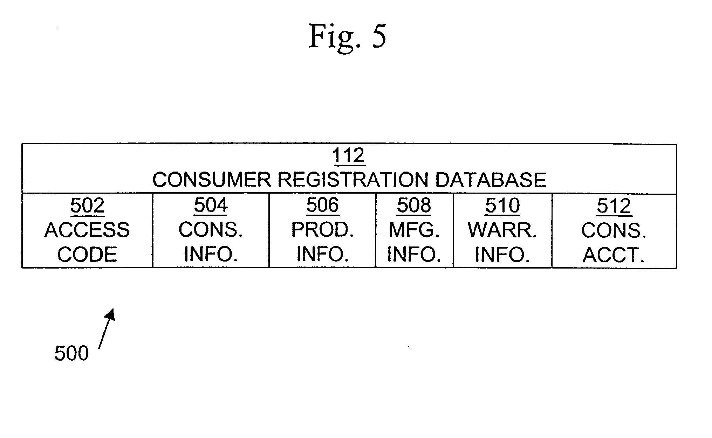

An exemplary format of an entry 500 in consumer registration database 112 is shown in Fig. 5. Entry 500 includes access code field 502, consumer information field 504, product field 506, manufacturer field 508, warranty field 510, and consumer account field 512. Access code 502 is used as the key field for the entry. When product information server 106 receives an access code or registration number, the access code fields of entries in consumer registration database 112 are searched until an entry having a matching value in access code field 502 is found. Product information server 106 then retrieves the remaining fields for use. Consumer information field 504 contains information that identifies and may describe the consumer who has been assigned the access code contained in access code field 502. For example, consumer information field 504 may contain the consumer's name and address, telephone and fax numbers, e-mail address, demographic information such as age, sex, economic status, marital status, etc., and other information such as product preferences, potential purchases, etc.

Product field 508 contains information that identifies, and may describe, the registered product associated with the access code in access code field 502. Product field 508 may simply contain information that identifies the product, such as the UPC or part number that was originally entered by the consumer, after validation. However, product field 508 may also contain additional information related to the product, such as the name of the product, the serial number of the unit owned by the consumer, the size (if applicable), the power rating (if applicable), the version (if applicable), etc. Manufacturer field 512 contains information that identifies, and may describe, the manufacturer of the product identified in product field 508. Warranty field 512 contains information relating to warranties on the product. The warranty-related information may include the date of purchase of the product, the vendor and location of purchase, the date of warranty registration, etc.

Consumer account field 514 may contain a financial account number, such as a credit card account number or bank account number provided by the consumer. The financial account number allows product information server 106 to charge the consumer for provision of product information to the consumer and for storage of the consumer's particular information in consumer registration database 112. The consumer may be charged on a periodic basis, or upon accessing product information server 106. The financial account number additionally allows product information server 106 to subscribe and maintain extended warranties on products registered by the consumer. The extended warranty may be provided by the operator of product information server 106, by the manufacturer of the product, or by a third-party service provider.

## Claims

1. A method of providing product information to a consumer of a product over a network, the method comprising the steps of:
receiving registration information including an identifier of the product and information relating to the consumer of the product;
determining whether the identifier is valid;
storing the registration information;
transmitting an access code identifying the stored registration information;
transmitting product information relating to the product identified by the identifier.

2. The method of claim 1, further comprising the step of:
registering a warranty for the product identified by the identifier.

3. The method of claim 1 or claim 2, wherein the registration information further includes a financial account number and the method further comprises the steps of:
registering an extended warranty for the product identified by the identifier; and
charging a financial account specified by the financial account number for the extended warranty.

4. The method of claim 3, wherein the financial account is charged periodically.

5. The method of any one of claims 1 to 4, further comprising the steps of:
receiving the access code;
retrieving the stored registration information including the identifier of the product using the access code; and
transmitting current product information relating to the product identified by the identifier.

6. The method of claim 5, wherein the access code is received periodically.

7. The method of claim 5 or claim 6, wherein the registration information further includes a financial account number and the method further comprises the steps of:
charging a financial account specified by the financial account number for transmission of the current product information.

8. A system for providing product information to a consumer of a product, comprising:
means for receiving registration information including an identifier of the product and information relating to the consumer of the product;
means for determining whether the identifier is valid;
means for storing the registration information;
means for transmitting an access code identifying the stored registration information;
means for transmitting product information relating to the product identified by the identifier.

9. The system of claim 8, further comprising:
means for registering a warranty for the product identified by the identifier.

10. The system of claim 8 or claim 9, wherein the registration information further includes a financial account number and the system further comprises:
means for registering an extended warranty for the product identified by the identifier; and
means for charging a financial account specified by the financial account number for the extended warranty.

11. The system of claim 8, further comprising:
means for receiving the access code;
means for retrieving the stored registration information including the identifier of the product using the access code; and
means for transmitting current product information relating to the product identified by the identifier.

12. The system of claim 11, wherein the registration information further includes a financial account number and the system further comprises:
means for charging a financial account specified by the financial account number for transmission of the current product information.

13. A system for providing product information to a consumer of a product, comprising:
a receiver operable to receive registration information including an identifier of the product and information relating to the consumer of the product;
a validation device operable to determine whether the identifier is valid;
a database operable to store the registration information;
a transmitter operable to transmit an access code identifying the stored registration information and product information relating to the product identified by the identifier.

14. The system of claim 13, further comprising:
a registration device operable to register a warranty for the product identified by the identifier.

15. The system of claim 13 or claim 14, wherein
the receiver is further operable to receive the access code;
the system further comprises a retrieval device operable to access the database and retrieve the stored registration information including the identifier of the product using the access code; and
the transmitter is further operable to transmit current product information relating to the product identified by the identifier.
